# EUROPEAN PATENT SPECIFICATION

(11) **EP 3 443 213 B1**
(45) Date of publication and mention of the grant of the patent: **06.05.2020**
(21) Application number: 16728369.6
(22) Date of filing: 13.04.2016
(51) Int. Cl.: F02M 26/10, F02M 26/19, F02M 26/51, F16K 11/12, F16K 11/16, F16K 11/18, F02M 26/21, F02M 35/10, F02M 26/54, F02M 26/65, F02M 26/71, F02M 26/70, F02D 9/02

(54) **A FLOW CONTROL DEVICE BETWEEN A FIRST LINE AND A SECOND LINE**
DURCHFLUSSSTEUERUNGSVORRICHTUNG ZWISCHEN EINER ERSTEN LEITUNG UND EINER ZWEITEN LEITUNG
DISPOSITIF DE RÉGULATION D'ÉCOULEMENT ENTRE UNE PREMIÈRE LIGNE ET UNE SECONDE LIGNE

(43) Date of publication of application: 20.02.2019
(73) Proprietor: Volvo Truck Corporation, 405 08 Göteborg (SE)
(72) Inventor: PETIT, Jean-Pascal, 69250 Montanay (FR)
(74) Representative: Goreaud, Alexandra
(86) International application number: PCT/IB2016/000744
(87) International publication number: WO 2017/178861

(56) References cited:
- US-A1- 2005 188 967
- US-A1- 2007 199 549

## Description

### TECHNICAL FIELD

The invention relates to a flow control device designed to be positioned at a junction area between a first line carrying a first fluid and a second line carrying a second fluid towards the first line. The invention also relates to an engine arrangement comprising such a flow control device between an air intake line and an EGR (exhaust gas recirculation) line. The invention further relates to a vehicle comprising such an engine arrangement, and to a method for controlling the flow of a second fluid flowing in a second line towards a first line carrying a first fluid.

The invention can be applied in passenger cars, medium duty vehicles or heavy-duty vehicles, such as trucks, buses and construction equipment.

### BACKGROUND

In order to meet the regulations concerning the upper limit of NOx (nitrogen oxide and nitrogen dioxide) emissions in internal combustion engines, it is known to recirculate a portion of the exhaust gas back to the engine cylinders. Such an exhaust gas recirculation (EGR) system results in lowering the combustion temperatures and, as a consequence, limits NOx generation as NOx is generated by oxygen and high temperature. Additionally, by providing an EGR cooler, the EGR gas are cooled before there are reintroduced into the engine, which further reduces NOx emissions.

Introducing enough EGR gas in the engine may require to draw EGR gas, which can be achieved by creating a depression by means of a Venturi device. This can typically occur at low engine speeds wherein the pressure drop is not enough to drive EGR. Then it is difficult to find a good compromise between the EGR pressure drop that should be enough in case of low flow and that should not generate to high pressure losses at high engine speeds.

A first level of improvement is proposed by US 2007/199549 A1: it discloses a flow control device positioned at a junction area between an air intake line and an EGR line, wherein an EGR valve opens an EGR discharge port at a Venturi nozzle of the air intake line, and wherein the cross-section of said Venturi nozzle is adjustable.

However, it appears that, from several standpoints, there is room for improvement in this field, particularly to provide a simpler and more compact design.

### SUMMARY

An object of the invention is to provide a technical solution for controlling the flow of a second fluid flowing in a second line towards a first line carrying a first fluid, which ensures a sufficient flow rate of the second fluid towards the first line, while also reducing pressure losses.

The object is achieved by a flow control device designed to be positioned at a junction area between a first line carrying a first fluid and a second line carrying a second fluid towards the first line. Said flow control device comprises:
- at least one wall member forming at least part of the peripheral wall of the first line, said wall member having an opening and being movable so as to reduce the cross-section of the first line, in the vicinity of the opening, from a full section state to a reduced section state, in use;
- a valve comprising:
   - a housing secured to the wall member and having an inner passageway between a first port in fluid communication with the wall member opening and a second port in fluid communication with the second line;
   - a shutter which is at least partially mounted in said housing and which can move in said housing between a closed position, in which the shutter closes the inner passageway, and an open position, in which the second fluid can flow through said inner passageway;
- an actuator connected to the shutter, which can be moved with respect to the housing, and accordingly move the shutter in said housing, between a first position, corresponding to the closed position of the shutter, and a second position, corresponding to the open position of the shutter, the relative position between the housing and the wall member remaining unchanged during this movement of the actuator.

According to the invention, the actuator is arranged to be further movable from its second position to a third position and to cause, during this further movement, a move of the valve - i.e. the unit constituted by the housing and the shutter - from a neutral position towards a sucking position, and to cause accordingly a move of the wall member secured to the housing, from its full section state towards its reduced section state.

With such a flow control device, when the required flow of the second fluid is nil or fairly low and when the pressure drop in the second line is enough, said flow is simply controlled by the valve shutter, and the wall member remains in its full section state, thereby generating no additional pressure loss. When the required flow of the second fluid is higher or when the pressure drop in the second line is not enough, and having the shutter in the open position is not sufficient for that, the wall member is moved to form a reduced section in the first line. As a result, a depression is created near the first port, by Venturi effect, which allows sucking more second fluid. During this further movement, the shutter does not move with respect to the housing, meaning that the flow cross-section in the inner passageway is not changed.

Therefore, the pressure losses are greatly reduced, as they exist mainly when the second fluid flow needs to be high, which requires the creation of a Venturi effect, the wall member can be otherwise in its full section state.

More precisely, according to the invention, one and the same actuator is operated, typically depending on the current needs of a system including the flow control device. Controlling the system by a single actuator results in a simpler structure and in lower costs.

Providing at least two distinct and subsequent phases in the actuator movement reflects at least two distinct and subsequent phases in the operation of the system including the flow control device, and therefore leads to a better control of the second fluid flow. This ultimately entails better efficiency and fuel savings.

In an embodiment, the housing may comprise an abutment with which the actuator is designed to come in contact in its second position, so that said further movement of the actuator from its second position towards its third position entails a corresponding movement of the housing.

According to the invention, the housing is secured to the wall member in such a way that the first port substantially coincides with the wall member opening. Besides, the inner passageway can be substantially orthogonal to the wall member in the vicinity of the first port.

The flow control device may comprise elastic return means biasing the shutter towards its closed position and/or elastic return means biasing the housing towards the full section state of the wall member.

According to a first embodiment, the shutter is configured to rotate in the housing between the closed position, in which an outlet of the shutter and the housing first port or second port are mutually offset, and the open position, in which the outlet of the shutter and the housing first port or second port substantially face each other.

In this first embodiment, the housing can have an axis, and the movement of the housing from the valve neutral position towards the valve sucking position, caused by the further movement of the actuator, can be a rotation about a rotation axis which is offset with respect to the housing axis. As a result, when the housing has turned towards in the valve sucking position, it has also moved towards the first line, in use, which has resulted in pushing or pulling the wall member towards the reduced section state.

Alternatively or in addition, the housing can have a protruding portion which extends outwardly near and towards the wall member. Such a protruding portion can push or contribute to pushing the wall member towards the reduced section state.

According to a second embodiment, the shutter is configured to slide along a sliding axis, in the housing, between the closed position and the open position. Moreover, the housing can be configured to move along the sliding axis from the valve neutral position towards the valve sucking position, as a result of the further movement of the actuator.

The wall member may comprise an elastically deformable membrane, and/or at least one rigid panel having one end connected to the housing near the first port and one end equipped with sliding means so as to slide with respect to the rest of the first line peripheral wall.

For a better suction effect, the wall member takes a generally Venturi shape in its reduced section state.

The invention further relates to a flow control system comprising a first line carrying a first fluid and a second line carrying a second fluid towards the first line, as well as a flow control device as previously described.

According to a second aspect, the invention relates to an engine arrangement comprising an internal combustion engine, an air intake line carrying air towards the engine, an exhaust line carrying exhaust gas from the engine, and an EGR (exhaust gas recirculation) line rerouting part of the exhaust gas back to the air intake line. The engine arrangement further comprises a flow control device as previously described, the flow control device being positioned at a junction area between the air intake line, as the first line, and the EGR line, as the second line.

The engine arrangement may further comprise a controller for controlling the actuator depending on the engine operating conditions.

According to a third aspect, the invention relates to a vehicle comprising such an engine arrangement.

According to a fourth aspect, the invention relates to a method for controlling the flow of a second fluid flowing in a second line towards a first line carrying a first fluid, the second line being connected to the first line at a junction area, the method using a flow control device as previously described and comprising:
- in a first step, without modifying the cross-section of the first line, moving the valve shutter in the valve housing, by the actuator, from a closed position in which the second fluid cannot flow towards the first line, to an open position, in which the fluid can flow towards the first line ;
- in a subsequent second step, reducing the cross-section of the first line by modifying with the same actuator an adjustable Venturi shape near the junction area in order to suck the second fluid.

For example, in the first step, the actuator is moved from a first position to a second position and, in the second step, the actuator is moved from its second position to a third position.

The movement of the actuator from its second position to its third position can be in the continuation of the movement of the actuator from its first position to its second position and of the same type as the movement of the actuator from its first position to its second position, the entire movement of the actuator form its first position to its third position being for example a rotating movement or a sliding movement.

In the second step, the actuator may be made to move a wall member forming part of the peripheral wall of the first line from a full section state to a reduced section state.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic drawing of an engine arrangement according to an embodiment of the invention;
Fig. 2 is a schematic drawing of an engine arrangement according to another embodiment of the invention;
Fig. 3, 5 and 7 are schematic views of a flow control device according to a first embodiment of the invention, at successive phases of its operation, namely when the valve shutter is closed, when the valve shutter is open, and when the wall member has moved towards its reduced section state, respectively;
Fig. 4, 6 and 8 are cross-section views, taken along line AA of Fig. 3, 5 and 7 respectively;
Fig. 9-11 are schematic views of a variant of the flow control device of Fig. 3, 5 and 7, respectively, showing the actuator capable of moving the shutter and the housing;
Fig. 12-14 are schematic views of a flow control device according to a second embodiment of the invention, at successive phases of its operation, namely when the valve shutter is closed, when the valve shutter is open, and when the wall member has moved towards its reduced section state, respectively;
Fig. 15a, 16a, 17a are graphs showing respectively the EGR section, pressure difference at the EGR, and EGR flow, depending on the actuator position, with a flow control device of the prior art;
Fig. 15b, 16b, 17b are graphs corresponding to Fig. 15a, 16a, 17a respectively, with a flow control device according to the invention.

### DETAILED DESCRIPTION OF EXAMPLE EMBODIMENTS OF THE INVENTION

The invention relates to a flow control device designed to be positioned at a junction area between a first line carrying a first fluid and a second line carrying a second fluid towards the first line.

More specifically, the invention can be implemented in an engine arrangement of a vehicle, the flow control device being positioned at a junction area between the air intake line, as the first line, and the EGR line, as the second line.

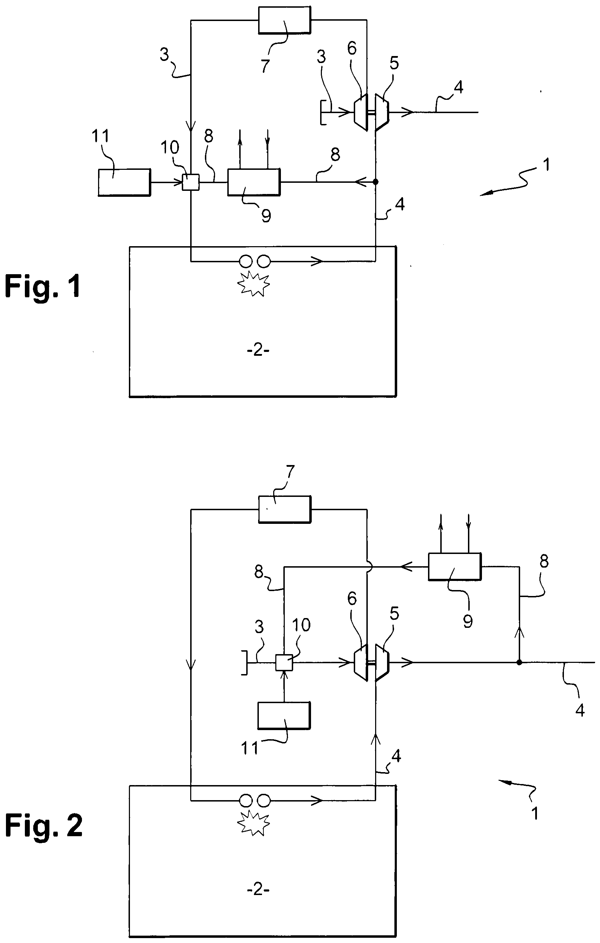

Figures 1 and 2 schematically show an engine arrangement 1 in a vehicle, for example an industrial vehicle such as a truck.

The engine arrangement 1 typically comprises an internal combustion engine 2 defining a plurality of cylinders (not shown). Intake air is carried towards an intake manifold feeding the cylinders, through an air intake line 3. The gas formed in each cylinder can be collected by an exhaust manifold and the exhaust gases are then carried towards the atmosphere by an exhaust line 4 connected to the exhaust manifold.

The engine arrangement 1 includes a turbocharger which comprises a turbine 5 located on the exhaust line 4 and a compressor 6 located on the air intake line 3, said compressor being driven by the turbine 5. After being compressed by the compressor 6, and before entering the intake manifold, air flowing in the intake line 3 is typically carried towards a charge air cooler 7.

The engine arrangement 1 further includes an EGR (exhaust gas recirculation) system which comprises an EGR line 8 capable of rerouting a portion of the engine's exhaust gas from the exhaust line 4 into the air intake line 3. Said EGR line 8 comprises an EGR cooler 9, which can use the engine coolant.

A flow control device 10 according to the invention is positioned at the junction area between the EGR line 8 and the air intake line 3. The flow control device 10 is designed to control the flow of EGR gas flowing in the EGR line 8 towards the air intake line 3. As will be explained in more detail below, the flow control device 10 comprises a valve and an actuator connected to the valve, in particular for controlling the valve aperture. The engine arrangement 1 may further comprise a controller 11 for controlling the actuator depending on the engine operating conditions, to allow an appropriate amount of exhaust gases to flow in the EGR line 8 and to be rerouted towards the engine intake manifold.

According to an embodiment, as illustrated in Figure 1, the EGR line 8 has an inlet connected to the exhaust line 4 upstream from the turbine 5 and an outlet connected to the intake line 3 downstream from the compressor 6. According to another embodiment, illustrated in Figure 2, the EGR line 8 has an inlet connected to the exhaust line 4 downstream from the turbine 5 and an outlet connected to the intake line 3 upstream from the compressor 6.

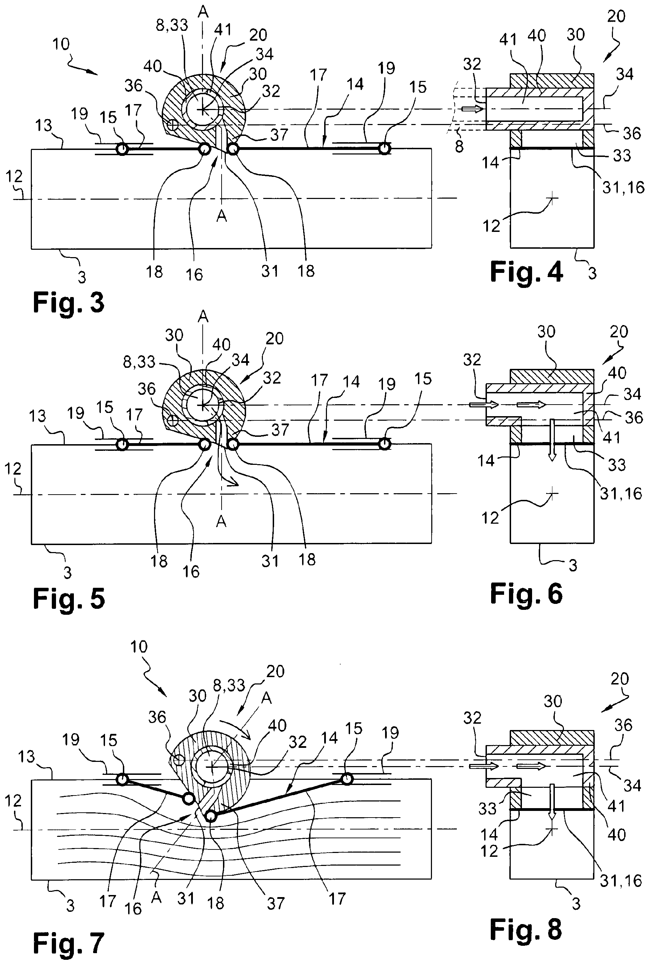

As shown in particular in Figures 3, 5 and 7, the air intake line 3 has an axis 12 and at least one peripheral wall comprising a fixed portion 13 and a wall member 14 which is movable with respect to the fixed portion 13. The wall member 14 has two ends 15, each end 15 being coupled to the fixed portion 13 of the peripheral wall of the air intake line 3, and an opening 16 between the inside and the outside of the air intake line 3. The wall member 14 is movable so as to reduce the cross-section of the air intake line 3, in the vicinity of the opening 16, between a full section state (as shown in Figure 3) and a reduced section state (as shown in Figure 7), in which the wall member 14 has moved towards the axis 12.

For that purpose, as illustrated in the figures, the wall member 14 can comprise two rigid panels 17 on either side of the opening 16. Each panel 17 has a first end which is an end 15 of the wall member 14, and a second end 18 which is located around the opening edge. The first end 15 of each panel 17 is configured to slide with respect to the fixed portion 13, along a direction substantially parallel to axis 12. The first end 15 can be equipped with sliding means engaged and guided in a guiding member 19 secured to the fixed portion 13 of the peripheral wall.

Alternatively, in an embodiment not shown, the wall member can comprise an elastically deformable membrane the ends of which are securely fastened to the fixed portion 13 of the peripheral wall of the air intake line 3.

The flow control device 10 comprises a valve 20 which includes a housing 30 secured to the wall member 14, and a shutter 40 movable in the housing 30.

The housing 30 has an inner passageway 33 between a first port 31 which is in fluid communication with the wall member opening 16, and a second port 32 which is in fluid communication with the EGR line 8. In other words, the second port 32 forms an inlet for the EGR gases, and the first port 31 forms an outlet for the EGR gases. In an embodiment, the housing 30 is secured to the wall member 14 around the edge of the opening 16, for example at or near the second ends 18 with the illustrated configuration, and the first port 31 substantially coincides with the wall member opening 16. In an implementation, the inner passageway 33 can be substantially orthogonal to the wall member 14 in the vicinity of the first port 31.

The shutter 40 is at least partially mounted in the housing 30 and can move in said housing 30 between a closed position, in which the shutter 40 closes the inner passageway 33, and an open position, in which the EGR gases can flow through said inner passageway 33.

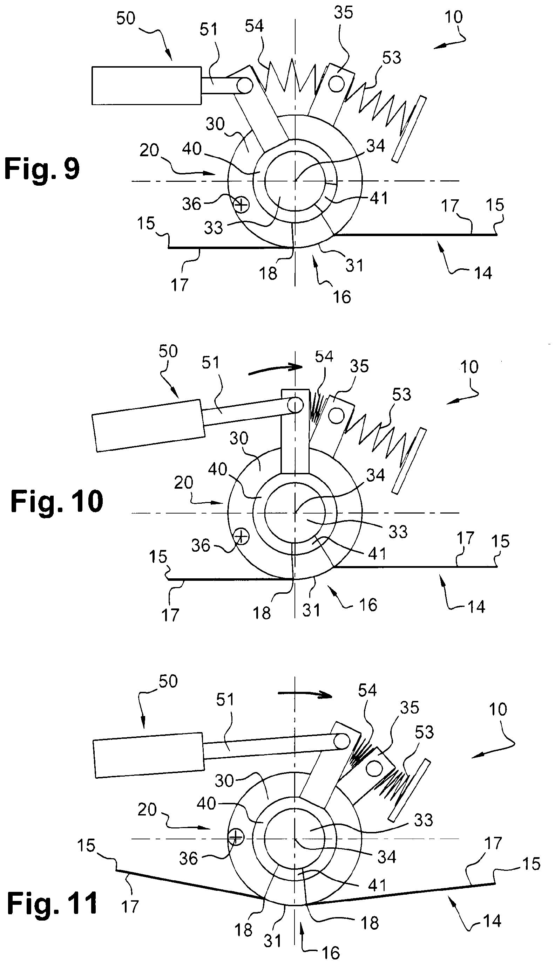

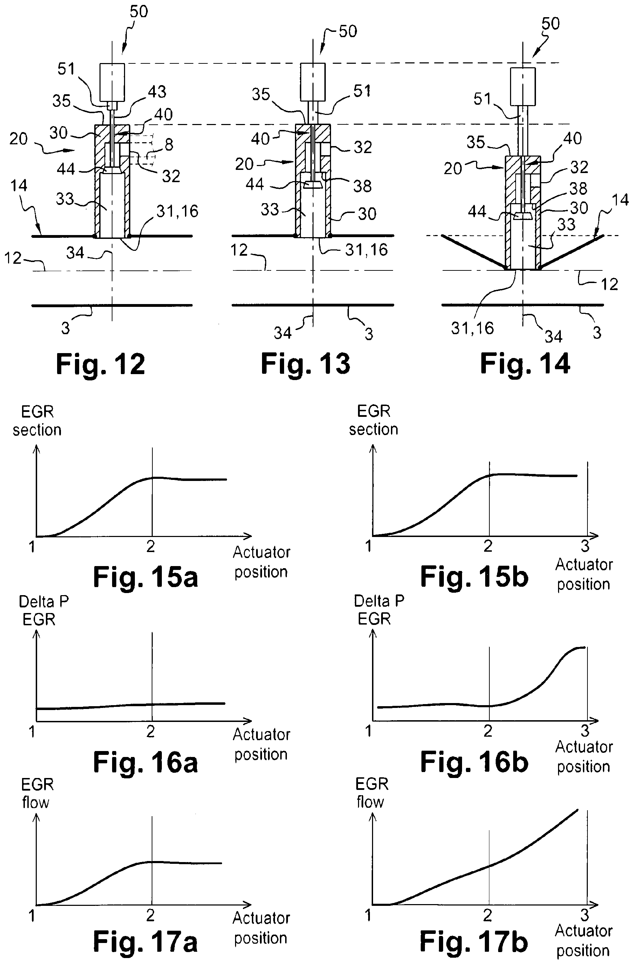

As shown in Figures 9-14, the flow control device 10 comprises an actuator 50 connected to the shutter 40, wherein the shutter 40 can be moved with respect to the housing 30, and accordingly move the shutter 40 in said housing 30 between its closed position and its open position. The actuator 50 can include a rod 51 which can move substantially linearly from a retracted position (see Figures 9 and 12) to an extended position (Figures 11 and 14).

As will be explained below, it may be provided an abutment 35 on the housing 30, with which the actuator 50 is designed to come in contact, so that the actuator 50 can also move the housing 30. The actuator is thus capable of moving the valve 20:
- from a neutral position, in which the wall member 14 is in its full section state, i.e. located in the extension of the fixed portion 13 of the peripheral wall of the air intake line 3 (as in Figure 3);
- towards a sucking position, in which the wall member 14 is in its reduced section state, i.e. has moved towards the axis 12 (as in Figure 7).

The flow control device 10 may further comprise elastic return means 53 for biasing the housing 30 towards the full section state of the wall member 14, and/or elastic return means 54 for biasing the shutter 40 towards its closed position.

A first embodiment of the invention is now described with reference to Figures 4-11.

The housing 30 has an axis 34 which is orthogonal to axis 12 and does not intersect axis 12. The inner passageway 33 has a cylindrical portion in which the shutter 40 can rotate, about axis 34. The shutter 40 can be cylindrical, with a radial through hole forming an outlet 41 for the EGR gases. More specifically, the shutter 40 can rotate in the housing 30 between:
- the closed position, in which the outlet 41 of the shutter 40 and a port of the housing 30 are mutually offset, the shutter 40 thereby closing the inner passageway 33;
- and the open position, in which the outlet 41 of the shutter 40 and the same port of the housing 30 substantially face each other, whereby the EGR gases can flow through said inner passageway 33.

In the configurations of Figures 3-11, the outlet 41 of the shutter 40 is designed to face the housing first port 31 in the open position.
Depending on the engine current operating conditions, the controller 11 controls the flow control device 10, by controlling the actuator 50.

When no EGR gases have to be introduced in the engine cylinders, i.e. in the air intake line 3, the flow control device 10 is in the position shown in Figures 3, 4 and 9, namely: the actuator 50 is in a first position, the shutter 40 is in the closed position, the valve 20 is in its neutral position. Thus, the EGR gases cannot flow from the EGR line 8 towards the air intake line 3. Besides, the air intake line 3 has a substantially constant cross-section area around the flow control device 10.

When a supply of EGR gases is required, the actuator 50 is moved with respect to the housing 30. As the actuator 50 is connected to the shutter 40, this movement of the actuator 50 entails a move of the shutter 40 in the housing 30. In the disclosed first embodiment, the shutter movement is a rotation about axis 34. The controller 11 controls the actuator 50 so that the rotation angle of the shutter 40 relative to the housing 30, from the closed position, leads to the creation of an appropriately dimensioned path for the EGR gases, corresponding to the actual need regarding the EGR gases flow towards the air intake line 3.

Such a first step of the actuator movement can be continued, until the actuator 50 reaches a second position corresponding to the open position of the shutter 40. In this configuration, shown in Figures 5, 6 and 10, the housing 30 has not moved with respect to the air intake line 3, and the actuator 50 is in contact with the abutment 35 arranged on the housing 30.

If the required EGR gases flow increases, the actuator 50 is subsequently moved further from its second position, in a second step of the actuator movement. As the shutter 40 is already in its open position, and because the actuator 50 is in contact with the abutment 35, this further movement of the actuator 50 causes a move of the whole valve 20 - i.e. the housing 30 and the shutter 40, the shutter not moving inside the housing 30.

In the disclosed first embodiment, the valve movement is a rotation about an axis 36, which is parallel to axis 34 but offset with respect to axis 34. More precisely, axis 36 is offset from axis 34 in a direction parallel to axis 12, going away from the opening 16, and located closer to the air intake line 3.

As a result, the rotation of the valve 20 about axis 36 entails a portion of the housing 30 located near the first port 31, i.e. near the wall member opening 16, to be moved towards axis 12. In other words, the wall member 14 is pushed towards the axis 12, thereby reducing the air intake line cross-section in the vicinity of the opening 16.

This leads to the creation of a depression in the air intake line 3, in the vicinity of the opening 16, which entails EGR gases to be sucked from the inner passageway 33 towards the air intake line 3 (Venturi effect).

In order to increase or facilitate the movement of the wall member 14 caused by the movement of the housing 30, the housing may be provided with a protruding portion 37 which extends outwardly near and towards the wall member 14 (see Figures 3, 5 and 7).

Such a second step of the actuator movement can be continued, until the actuator 50 reaches a third position corresponding to the sucking position of the valve 20 (see Figures 7, 8 and 11). The flow control device 10 is designed so that this position ensures a sufficient flow of EGR gases is provided in substantially any operating conditions, and the wall member 14 has not been excessively moved or deformed, and therefore cannot be damaged.

The controller 11 controls the actuator 50 so that the rotation angle of the housing 30, from the neutral position of the valve 20, leads to the creation of an appropriately dimensioned Venturi for the EGR gases, corresponding to the actual need regarding the EGR gases flow towards the air intake line 3.

A second embodiment of the invention is now described with reference to Figures 12-14.

The housing 30 has an axis 34 which is orthogonal to axis 12 and intersects axis 12. The inner passageway 33 has a cylindrical portion in which the shutter 40 can slide, along axis 34. The second port 32 can be arranged radially, and a shoulder 38 can be provided in the cylindrical portion of the inner passageway 33. The shutter 40 can include a rod 43 sealingly engaged in an axial hole of the housing 34, so as to slide in said axial hole, and a plug 44 at the end of the rod 43 located in the inner passageway 33.

More specifically, the shutter 40 can slide in the housing 30 between:
- the closed position, in which the plug 44 cooperates with the shoulder 38 so as to close the inner passageway 33;
- and the open position, in which the plug 44 has been moved towards axis 12 and is therefore is spaced apart the shoulder 38, whereby the EGR gases can flow through said inner passageway 33.

Depending on the engine current operating conditions, the controller 11 controls the flow control device 10, by controlling the actuator 50.

When no EGR gases have to be introduced in the engine cylinders, i.e. in the air intake line 3, the flow control device 10 is in the position shown in Figure 12, namely: the actuator 50 is in a first position, the shutter 40 is in the closed position, the valve 20 is in its neutral position. Thus, the EGR gases cannot flow from the EGR line 8 towards the air intake line 3. Besides, the air intake line 3 has a substantially constant cross-section area around the flow control device 10.

When a supply of EGR gases is required, the actuator 50 is moved with respect to the housing 30. In the illustrated embodiment, the actuator rod 51 is moved along axis 34. As the actuator 50 is connected to the shutter 40, this movement of the actuator 50 entails a move of the shutter 40 in the housing 30, namely a sliding movement of the shutter 40 along axis 34. The controller 11 controls the actuator 50 so that the range of the sliding movement of the shutter 40 relative to the housing 30, from the closed position, leads to the creation of an appropriately dimensioned path for the EGR gases, corresponding to the actual need regarding the EGR gases flow towards the air intake line 3.

Such a first step of the actuator movement can be continued, until the actuator 50 reaches a second position corresponding to the open position of the shutter 40. In this configuration, shown in Figure 13, the housing 30 has not moved with respect to the air intake line 3, and the actuator 50 is in contact with the abutment 35 arranged on the housing 30.

If the required EGR gases flow increases, the actuator 50 is subsequently moved further from its second position, in a second step of the actuator movement. As the shutter 40 is already in its open position, and because the actuator 50 is in contact with the abutment 35, this further movement of the actuator 50 causes a move of the whole valve 20 - i.e. the housing 30 and the shutter 40, the shutter 40 not moving inside the housing 30.

In the disclosed first embodiment, the valve movement is a sliding movement along axis 34. As a result, the wall member 14 is pushed towards the axis 12 by the housing 30, thereby reducing the air intake line cross-section in the vicinity of the opening 16. Because of the creation of a depression in the air intake line 3, in the vicinity of the opening 16, EGR gases are sucked from the inner passageway 33 towards the air intake line 3.

Such a second step of the actuator movement can be continued, until the actuator 50 reaches a third position corresponding to the sucking position of the valve 20 (see Figure 14). The flow control device 10 is designed so that this position ensures a sufficient flow of EGR gases is provided in substantially any operating conditions, and the wall member 14 has not been excessively moved or deformed, and therefore cannot be damaged.

The controller 11 controls the actuator 50 so that the range of the sliding movement of the valve 20, from its neutral position, leads to the creation of an appropriately dimensioned Venturi for the EGR gases, corresponding to the actual need regarding the EGR gases flow towards the air intake line 3.

Although no elastic return means are illustrated in Figures 12-14, they may advantageously be provided.

Figures 15a-17b show the significant advantages of the invention.

In these figures, the abscissa axis is the actuator position, from its first position towards its third position.

With some exemplary prior art devices (in Figures 15a, 16a and 17a), the actuator can only move from a first position to a second position, no further movement being provided. Consequently, the data in the ordinate axis remains constant when the actuator has reached its second position.

As shown in Figures 15a and 15b, the change of the EGR section (i.e. the inner passageway cross section) as the actuator 50 moves is substantially the same with the invention and with these prior art devices. More precisely, the EGR section progressively increases from the actuator first position (where the shutter is closed) towards the actuator second position (where the shutter is open). Then, between the second position and the third position, the EGR section substantially remains constant.

Figure 16a and 16b show the Delta P EGR depending on the actuator position, respectively with these prior art devices and with the invention. In the present application, the expression "Dela P EGR" refers to the difference of pressure between:
- the pressure in the exhaust line 4 at the junction area between the exhaust line 4 and the EGR line 8 and
- the pressure in the air intake line 3 at the junction area between the air intake line 3 and the EGR line 8.
When the actuator is between its first and second positions, the situation is substantially the same in both cases. The pressure drop in the EGR line is quite constant in this phase. However, when the actuator moves from its second position towards its third position, with the invention, the Delta P EGR does not remain constant as with these prior art devices but, on the contrary, significantly increases as the section of the main stream can be reduced and then generates a Venturi effect. This is of particular interest at low engine speed, when there is not enough pressure drop in the EGR line to drive the needed amount of EGR.

Figure 17a and 17b show the EGR flow depending on the actuator position, respectively with these prior art devices and with the invention. When the actuator is moved between its first and second positions, the EGR flow progressively increases, both with these prior art devices and with the invention. However, the invention allows the EGR flow to continue increasing when the actuator is moved from its second position to its third position. When the maximum EGR section is reached in the second position, the EGR flow can further increase if the Venturi effect increases up to the third position 3.

It is to be understood that the present invention is not limited to the embodiments described above and illustrated in the drawings; rather, the skilled person will recognize that many changes and modifications may be made within the scope of the appended claims. For example, without departing from the scope of the following claims, the actuator 50 can take intermediate positions between the first and second positions such that the shutter 40 can take intermediate positions between its fully closed position and its fully open position to vary EGR section. Furthermore, the actuator 50 can take intermediate positions between the second and the third positions to adjust Venturi shape and therefore suction EGR effect in the air intake line 3 depending on the engine current operating conditions.

## Claims

1. A flow control device designed to be positioned at a junction area between a first line (3) carrying a first fluid and a second line (8) carrying a second fluid towards the first line (3), the flow control device (10) comprising:
- at least one wall member (14) forming at least part of the peripheral wall of the first line (3), said wall member (14) having an opening (16) and being movable so as to reduce the cross-section of the first line (3), in the vicinity of the opening (16), from a full section state to a reduced section state, in use;
- a valve (20) comprising:
- a housing (30) secured to the wall member (14) and having an inner passageway (33) between a first port (31) and a second port (32) in fluid communication with the second line (8);
- a shutter (40) which is at least partially mounted in said housing (30) and which can move in said housing (30) between a closed position, in which the shutter (40) closes the inner passageway (33), and an open position, in which the second fluid can flow through said inner passageway (33);
- an actuator (50) connected to the shutter (40), which can be moved with respect to the housing (30), and accordingly move the shutter (40) in said housing (30), between a first position, corresponding to the closed position of the shutter (40), and a second position, corresponding to the open position of the shutter (40), the relative position between the housing (30) and the wall member (14) remaining unchanged during this movement of the actuator (50);
wherein the actuator (50) is arranged to be further movable from its second position to a third position and to cause, during this further movement, a move of the valve (20) from a neutral position towards a sucking position, and to cause accordingly a move of the wall member (14) secured to the housing (30), from its full section state towards its reduced section state;
**characterized in that**
• the first port (31) is in fluid communication with the wall member (14) opening (16); and **in that**
• the housing (30) is secured to the wall member (14) in such a way that the first port (31) substantially coincides with the wall member opening (16).

2. The flow control device according to claim 1, **characterized in that** the housing (30) comprises an abutment (35) with which the actuator (50) is designed to come in contact in its second position, so that said further movement of the actuator (50) from its second position towards its third position entails a corresponding movement of the housing (30).

3. The flow control device according to claim 1 or 2, **characterized in that** the inner passageway (33) is substantially orthogonal to the wall member (14) in the vicinity of the first port (31).

4. The flow control device according to any one of claims 1 to 3, **characterized in that** it comprises elastic return means (54) biasing the shutter (40) towards its closed position and/or elastic return means (53) biasing the housing (30) towards the full section state of the wall member (14).

5. The flow control device according to any one of claims 1 to 4, **characterized in that** the shutter (40) is configured to rotate in the housing (30) between the closed position, in which an outlet (41) of the shutter (40) and the housing first port (31) or second port (32) are mutually offset, and the open position, in which the outlet of the shutter (40) and the housing (30) first port (31) or second port (32) substantially face each other.

6. The flow control device according to claim 5, **characterized in that** the housing (30) has an axis (34) and **in that** the movement of the housing (30) from the valve neutral position towards the valve sucking position, caused by the further movement of the actuator (50), is a rotation about a rotation axis (36) which is offset with respect to the housing (30) axis.

7. The flow control device according to claim 5 or 6, **characterized in that** the housing (30) has a protruding portion (37) which extends outwardly near and towards the wall member (14).

8. The flow control device according to any one of claims 1 to 4, **characterized in that** the shutter (40) is configured to slide along a sliding axis (34), in the housing (30), between the closed position and the open position.

9. The flow control device according to claim 8, **characterized in that** the housing (30) is configured to move along the sliding axis (34) from the valve neutral position towards the valve sucking position, as a result of the further movement of the actuator (50).

10. The flow control device according to any one of claims 1 to 9, **characterized in that** the wall member (14) comprises an elastically deformable membrane.

11. The flow control device according to any one of claims 1 to 10, **characterized in that** the wall member (14) comprises at least one rigid panel (17) having one end (18) connected to the housing (30) near the first port (31) and one end (15) equipped with sliding means so as to slide with respect to the rest of the first line peripheral wall.

12. The flow control device according to any one of claims 1 to 9, **characterized in that** the wall member (14) takes a generally Venturi shape in its reduced section state.

13. An engine arrangement comprising an internal combustion engine (2), an air intake line (3) carrying air towards the engine (2), an exhaust line (4) carrying exhaust gas from the engine (2), and an EGR (exhaust gas recirculation) line (8) rerouting part of the exhaust gas back to the air intake line (3), **characterized in that** the engine arrangement (1) further comprises a flow control device (10) according to any one of claims 1 to 12, the flow control device (10) being positioned at a junction area between the air intake line, as the first line (3), and the EGR line, as the second line (8).

14. A vehicle comprising an engine arrangement (1) according to claim 13.

15. A method for controlling the flow of a second fluid flowing in a second line (8) towards a first line (3) carrying a first fluid, the second line (8) being connected to the first line (3) at a junction area, the method using a flow control device according to any one of claims 1 to 12 and comprising:
in a first step, without modifying the cross-section of the first line (3), moving the valve shutter (40) in the valve housing (30), by the actuator (50), from a closed position in which the second fluid cannot flow towards the first line (3), to an open position, in which the fluid can flow towards the first line (3);
in a subsequent second step, reducing the cross-section of the first line (3) by modifying with the same actuator (50) an adjustable Venturi shape near the junction area in order to suck the second fluid.

## Patentansprüche

1. Durchflusssteuervorrichtung, konzipiert, um an einem Kreuzungsbereich zwischen einer ersten, ein erstes Fluid führenden Leitung (3) und einer zweiten, ein zweites Fluid in Richtung der ersten Leitung (3) führenden Leitung (8) positioniert zu werden, wobei die Durchflusssteuervorrichtung (10) Folgendes umfasst:
- wenigstens ein Wandelement (14), wenigstens einen Teil einer peripheren Wand der ersten Leitung (3) bildend, wobei das Wandelement (14) eine Öffnung (16) aufweist und solcherart bewegbar ist, dass es im Gebrauch den Querschnitt der ersten Leitung (3) in der Nähe der Öffnung (16) von einem vollen Abschnittszustand zu einem reduzierten Abschnittszustand reduziert,
- ein Ventil (20), Folgendes umfassend:
- ein Gehäuse (30), an dem ersten Wandelement (14) gesichert und mit einem inneren Durchgang (33) zwischen einem ersten Anschluss (31) und einem zweiten Anschluss (32) in fluidischer Verbindung mit der zweiten Leitung (8);
- einen Verschluss (40), welcher wenigstens teilweise in dem Gehäuse (30) montiert ist und welcher sich in dem Gehäuse (30) zwischen einer geschlossenen Position, in welcher der Verschluss (40) den inneren Durchgang (33) schließt, und einer offenen Position, in welcher das zweite Fluid durch den inneren Durchgang (33) fließen kann, bewegen kann;
- ein Stellglied (50), mit dem Verschluss (40) verbunden, welches in Bezug auf das Gehäuse (30) bewegt werden kann und entsprechend den Verschluss (40) in dem Gehäuse (30) zwischen einer ersten Position, der geschlossenen Position des Verschlusses (40) entsprechend, und einer zweiten Position, der offenen Position des Verschlusses (40) entsprechend, bewegen kann, wobei die relative Position zwischen dem Gehäuse (30) und dem Wandelement (14) während dieser Bewegung des Stellgliedes (50) unverändert bleibt;
wobei das Stellglied (50) angeordnet ist, um weiter aus seiner zweiten Position in eine dritte Position bewegbar zu sein und um während dieser weiteren Bewegung ein Bewegen des Ventils (20) aus einer neutralen Position in Richtung einer ansaugenden Position verursacht, und um entsprechend eine Bewegung des an dem Gehäuse (30) gesicherten Wandelements (14) von seinem vollen Abschnittszustand in Richtung seines reduzierten Abschnittszustandes zu verursachen;
**dadurch gekennzeichnet, dass**
• der erste Anschluss (31) in Fluidverbindung mit der Öffnung (16) des Wandelements (14) steht; und dadurch, dass
• das Gehäuse (30) solcherart an dem Wandelement (14) gesichert ist, dass der erste Anschluss (31) im Wesentlichen mit der Wandelementöffnung (16) übereinstimmt.

2. Durchflusssteuervorrichtung nach Anspruch 1, **dadurch gekennzeichnet, dass** das Gehäuse (30) ein Widerlager (35) umfasst, mit welchem das Stellglied (50) konzipiert ist, um in seiner zweiten Position damit in Kontakt zu kommen, sodass die weitere Bewegung des Stellgliedes (50) aus der zweiten Position in die dritte Position eine entsprechende Bewegung des Gehäuses (30) mit sich bringt.

3. Durchflusssteuervorrichtung nach Anspruch 1 oder 2, **dadurch gekennzeichnet, dass** der innere Durchgang (33) im Wesentlichen orthogonal zu dem Wandelement (14) in der Nähe des ersten Anschlusses (31) verläuft.

4. Durchflusssteuervorrichtung nach einem der Ansprüche 1 bis 3, **dadurch gekennzeichnet, dass** sie elastische Umkehrmittel (54) umfasst, den Verschluss (40) in Richtung seiner geschlossenen Position lenkend, und/oder elastische Umkehrmittel (53), das Gehäuse (30) in Richtung des vollen Abschnittszustandes des Wandelements (14) lenkend.

5. Durchflusssteuervorrichtung nach einem der Ansprüche 1 bis 4, **dadurch gekennzeichnet, dass** der Verschluss (40) konfiguriert ist, um in dem Gehäuse (30) zwischen der geschlossenen Position, in welcher ein Auslass (41) des Verschlusses (40) und das Gehäuse des ersten Anschlusses (31) oder zweiten Anschlusses (32) des Gehäuses zueinander versetzt sind, und der offenen Position, in welcher der Auslass des Verschlusses (40) und der erste Anschluss (31) oder zweite Anschluss (32) des Gehäuses (30) sich im Wesentlichen gegenüberliegen, zu rotieren.

6. Durchflusssteuervorrichtung nach Anspruch 5, **dadurch gekennzeichnet, dass** das Gehäuse (30) eine Achse (34) aufweist und dadurch, dass die Bewegung des Gehäuses (30) von der neutralen Position des Ventils in Richtung der ansaugenden Position des Ventils, verursacht von der weiteren Bewegung des Stellglieds (50), eine Rotation um eine Rotationsachse (36) ist, welche in Bezug auf die Achse des Gehäuses (30) versetzt ist.

7. Durchflusssteuervorrichtung nach Anspruch 5 oder 6, **dadurch gekennzeichnet, dass** das Gehäuse (30) einen hervorstehenden Abschnitt (37) aufweist, der sich nahe und in Richtung des Wandelements (14) nach außen erstreckt.

8. Durchflusssteuervorrichtung nach einem der Ansprüche 1 bis 4, **dadurch gekennzeichnet, dass** der Verschluss (40) konfiguriert ist, um in dem Gehäuse (30) entlang einer Gleitachse (34) zwischen der geschlossenen Position und der offenen Position zu gleiten.

9. Durchflusssteuervorrichtung nach Anspruch 8, **dadurch gekennzeichnet, dass** das Gehäuse (30) konfiguriert ist, um sich als Ergebnis der weiteren Bewegung des Stellglieds (50) entlang der Gleitachse (34) von der neutralen Position des Ventils in Richtung der ansaugenden Position des Ventils zu bewegen.

10. Durchflusssteuervorrichtung nach einem der Ansprüche 1 bis 9, **dadurch gekennzeichnet, dass** das Wandelement (14) eine elastisch verformbare Membran umfasst.

11. Durchflusssteuervorrichtung nach einem der Ansprüche 1 bis 10, **dadurch gekennzeichnet, dass** das Wandelement (14) wenigstens eine starre Platte (17) umfasst, von der ein Ende (18) nahe dem ersten Anschluss (31) mit dem Gehäuse (30) verbunden ist und ein Ende (15) mit Gleitmitteln ausgestattet ist, um in Bezug auf den Rest der peripheren Wand der ersten Leitung zu gleiten.

12. Durchflusssteuervorrichtung nach einem der Ansprüche 1 bis 9, **dadurch gekennzeichnet, dass** das Wandelement (14) in seinem reduzierten Abschnittszustand eine allgemeine Venturi-Form annimmt.

13. Motoranordnung, umfassend einen inneren Verbrennungsmotor (2), eine Luftaufnahmeleitung (3), dem Motor (2) Luft zuführend, eine Abgasleitung (4), von dem Motor (2) Abgas abführend, und eine Abgasrückführungsleitung (8), einen Teil des Abgases zu der Luftaufnahmeleitung (3) zurückführend, **dadurch gekennzeichnet, dass** die Motoranordnung (1) weiter eine Durchflusssteuervorrichtung (10) nach einem der Ansprüche 1 bis 12 umfasst, wobei die Durchflusssteuervorrichtung (10) an einem Kreuzungsbereich zwischen der Luftaufnahmeleitung als erste Leitung (3) und der Abgasrückführungsleitung als zweite Leitung (8) positioniert ist.

14. Fahrzeug, umfassend eine Motoranordnung (1) nach Anspruch 13.

15. Verfahren zum Steuern des Durchflusses eines zweiten Fluids, fließend in einer zweiten Leitung (8) in Richtung einer ersten Leitung (3), ein erstes Fluid führend, wobei die zweite Leitung (8) an einem Kreuzungsbereich mit der ersten Leitung (3) verbunden ist, wobei das Verfahren eine Durchflusssteuervorrichtung nach einem der Ansprüche 1 bis 12 verwendet und Folgendes umfasst:
in einem ersten Schritt, ohne Modifizieren des Querschnitts der ersten Leitung (3), Bewegen des Ventilverschlusses (40) in dem Ventilgehäuse (30) durch das Stellglied (50) von einer geschlossenen Position, in welcher das zweite Fluid nicht in Richtung der ersten Leitung (3) fließen kann, in eine offene Position, in welcher das Fluid in Richtung der ersten Leitung (3) fließen kann;
in einem folgenden Schritt, Reduzieren des Querschnitts der ersten Leitung (3) durch Modifizieren mit dem gleichen Stellglied (50) einer anpassbaren Venturi-Form nahe dem Kreuzungsbereich, um das zweite Fluid anzusaugen.

## Revendications

1. Dispositif de régulation de débit conçu pour être positionné au niveau d'une zone de jonction entre une première conduite (3) transportant un premier fluide et une deuxième conduite (8) transportant un deuxième fluide vers la première conduite (3), le dispositif de régulation de débit (10) comprenant :
- au moins un élément de paroi (14) faisant au moins partie de la paroi périphérique de la première conduite (3), ledit élément de paroi (14) ayant une ouverture (16) et étant mobile de manière à réduire la section transversale de la première conduite (3), au voisinage de l'ouverture (16), d'un état de section complète à un état de section réduite, en cours d'utilisation ;
- une soupape (20) comprenant :
- un boîtier (30) fixé à l'élément de paroi (14) et ayant un passage interne (33) entre un premier orifice (31) et un deuxième orifice (32) en communication fluidique avec la deuxième conduite (8) ;
- un obturateur (40) qui est au moins partiellement monté dans ledit boîtier (30) et qui peut se déplacer dans ledit boîtier (30) entre une position fermée, dans laquelle l'obturateur (40) ferme le passage interne (33), et une position ouverte, dans laquelle le deuxième fluide peut s'écouler à travers ledit passage interne (33) ;
- un actionneur (50) relié à l'obturateur (40), qui peut être déplacé par rapport au boîtier (30), et déplacer en conséquence l'obturateur (40) dans ledit boîtier (30), entre une première position, correspondant à la position fermée de l'obturateur (40), et une deuxième position, correspondant à la position ouverte de l'obturateur (40), la position relative entre le boîtier (30) et l'élément de paroi (14) restant inchangée lors de ce mouvement de l'actionneur (50) ;
dans lequel l'actionneur (50) est agencé pour être en outre mobile de sa deuxième position à une troisième position et pour provoquer, pendant ce mouvement supplémentaire, un déplacement de la soupape (20) d'une position neutre vers une position d'aspiration, et pour provoquer en conséquence un déplacement de l'élément de paroi (14) fixé au boîtier (30), de son état de section complète vers son état de section réduite ;
**caractérisé en ce que**
• le premier orifice (31) est en communication fluidique avec l'ouverture (16) de l'élément de paroi (14) ;
et **en ce que**
• le boîtier (30) est fixé à l'élément de paroi (14) de sorte que le premier orifice (31) coïncide sensiblement avec l'ouverture (16) d'élément de paroi.

2. Dispositif de régulation de débit selon la revendication 1, **caractérisé en ce que** le boîtier (30) comprend une butée (35) avec laquelle l'actionneur (50) est conçu pour venir en contact dans sa deuxième position, de sorte que ledit mouvement supplémentaire de l'actionneur (50) de sa deuxième position vers sa troisième position entraîne un mouvement correspondant du boîtier (30).

3. Dispositif de régulation de débit selon la revendication 1 ou 2, **caractérisé en ce que** le passage interne (33) est sensiblement orthogonal à l'élément de paroi (14) au voisinage du premier orifice (31).

4. Dispositif de régulation de débit selon l'une quelconque des revendications 1 à 3, **caractérisé en ce qu'**il comprend un moyen de rappel élastique (54) sollicitant l'obturateur (40) vers sa position fermée et/ou un moyen de rappel élastique (53) sollicitant le boîtier (30) vers l'état de section complète de l'élément de paroi (14).

5. Dispositif de régulation de débit selon l'une quelconque des revendications 1 à 4, **caractérisé en ce que** l'obturateur (40) est configuré pour tourner dans le boîtier (30) entre la position fermée, dans laquelle une sortie (41) de l'obturateur (40) et le premier orifice (31) ou le deuxième orifice (32) du boîtier sont décalés mutuellement, et la position ouverte, dans laquelle la sortie de l'obturateur (40) et le premier orifice (31) ou le deuxième orifice (32) du boîtier (30) se font sensiblement face.

6. Dispositif de régulation de débit selon la revendication 5, **caractérisé en ce que** le boîtier (30) a un axe (34) et **en ce que** le mouvement du boîtier (30) de la position neutre de soupape vers la position d'aspiration de soupape, provoqué par le mouvement supplémentaire de l'actionneur (50), est une rotation autour d'un axe de rotation (36) qui est décalé par rapport à l'axe de boîtier (30).

7. Dispositif de régulation de débit selon la revendication 5 ou 6, **caractérisé en ce que** le boîtier (30) a une partie en saillie (37) qui s'étend vers l'extérieur à proximité de et vers l'élément de paroi (14).

8. Dispositif de régulation de débit selon l'une quelconque des revendications 1 à 4, **caractérisé en ce que** l'obturateur (40) est configuré pour coulisser le long d'un axe de coulissement (34), dans le boîtier (30), entre la position fermée et la position ouverte.

9. Dispositif de régulation de débit selon la revendication 8, **caractérisé en ce que** le boîtier (30) est configuré pour se déplacer le long de l'axe de coulissement (34) de la position neutre de soupape vers la position d'aspiration de soupape, en raison du mouvement supplémentaire de l'actionneur (50).

10. Dispositif de régulation de débit selon l'une quelconque des revendications 1 à 9, **caractérisé en ce que** l'élément de paroi (14) comprend une membrane élastiquement déformable.

11. Dispositif de régulation de débit selon l'une quelconque des revendications 1 à 10, **caractérisé en ce que** l'élément de paroi (14) comprend au moins un panneau rigide (17) ayant une extrémité (18) reliée au boîtier (30) à proximité du premier orifice (31) et une extrémité (15) équipée d'un moyen de coulissement de manière à coulisser par rapport au reste de la paroi périphérique de première conduite.

12. Dispositif de régulation de débit selon l'une quelconque des revendications 1 à 9, **caractérisé en ce que** l'élément de paroi (14) prend une forme globalement de Venturi dans son état de section réduite.

13. Agencement de moteur comprenant un moteur à combustion interne (2), une conduite d'admission d'air (3) transportant de l'air vers le moteur (2), une conduite d'échappement (4) transportant le gaz d'échappement du moteur (2), et une conduite EGR (recirculation des gaz d'échappement) (8) redirigeant une partie du gaz d'échappement vers la conduite d'admission d'air (3), **caractérisé en ce que** l'agencement de moteur (1) comprend en outre un dispositif de régulation de débit (10) selon l'une quelconque des revendications 1 à 12, le dispositif de régulation de débit (10) étant positionné au niveau d'une zone de jonction entre la conduite d'admission d'air, comme étant la première conduite (3), et la conduite EGR, comme étant la deuxième conduite (8).

14. Véhicule comprenant un agencement de moteur (1) selon la revendication 13.

15. Procédé pour réguler le débit d'un deuxième fluide s'écoulant dans une deuxième conduite (8) vers une première conduite (3) transportant un premier fluide, la deuxième conduite (8) étant reliée à la première conduite (3) au niveau d'une zone de jonction, le procédé utilisant un dispositif de régulation de débit selon l'une quelconque des revendications 1 à 12 et comprenant le fait :
dans une première étape, sans modifier la section transversale de la première conduite (3), de déplacer l'obturateur de soupape (40) dans le boîtier de soupape (30), par l'actionneur (50), d'une position fermée dans laquelle le deuxième fluide ne peut pas s'écouler vers la première conduite (3), à une position ouverte, dans laquelle le fluide peut s'écouler vers la première conduite (3) ;
dans une deuxième étape ultérieure, de réduire la section transversale de la première conduite (3) en modifiant avec le même actionneur (50) une forme de Venturi réglable à proximité de la zone de jonction afin d'aspirer le deuxième fluide.
